# EUROPEAN PATENT APPLICATION

(11) **EP 1 816 574 A1**
(43) Date of publication of application: **08.08.2007**
(21) Application number: 06460010.9
(22) Date of filing: 24.04.2006
(51) Int. Cl.: G06F 17/30

(54) **Reporting of search results**

(30) Priority: 04.02.2006 PL 37888906
(71) Applicant: Iloggo Sp. z.o.o., 04-186 Warszawa (PL)
(72) Inventor: Mrzyglocki, Rafal, 05-075 Warszawa (PL)
(74) Representative: Marcinska-Porzuc, Aleksandra

(57) **Abstract**

A method of reporting to a user results of a search carried out in a computer network (400), wherein the results of the search are processed by a common access means (414) and the method comprises the following steps: assigning a first weight (202) to the number of cross-references pointing to a network resource (416); assigning a second weight (204) to the number of users that bookmarked said network resource (416); assigning a third weight (206) to the average rating of said network resource (416) given by the users that bookmarked said network resource (416); calculating (210, 214) an order of presentation of the results of the search on the basis (208) of the cross-references, number of users that bookmarked said network resources, the average rating and the assigned weights.

## Description

### Field of the Invention

The present invention relates to computer networks and, in particular, to the reporting of results of searching carried out in the computer networks and, in particular, in the Internet.

### Background of the Invention

When computer networks were created they allowed a small community of users in a company or at an academic campus for communication and sharing resources. User computers linked together were able to access various databases, send and receive messages and instructions from other remote computers also connected to the same network. Initially, the number of available resources and the amount of data that could be accessed via the early computer networks were not large and therefore searching and selection of the required resource was rather easy.

With the advent of the Internet, the situation changed. First, the number of networks connected together and the number of computers within these networks is now several hundreds of millions and counting. Second, the spectrum of applications of the computer networks is much broader now than it was in the early years of computer networks. In consequence, the number of data files, music, and video files as well as other services that can be accessed via the Internet today is so huge that in order to make effective use of the wealth of data on the Internet, specialized methods of searching and presentation of the search results are necessary.

With the rapidly increasing number of Internet users and the number of computer resources available via the Internet, the method of reporting search results becomes crucial. A search engine is a computer program operable on a server from a remote user's computer that returns a list of web sites (network resources) identified by their URLs (Universal Resource Locators), which matches the search criteria (e.g., keywords) specified by the user. There are hundreds of search engines available in the Internet, e.g., Google, Yahoo, Netsprint, etc. The problem, however, is that the number of returned resources that meet the search criteria is so huge that in many cases the results are useless for the user. A simple search carried out by Google with the phrase "home cinema" reported about 6.500.000 (six and a half million) hits. The problem is how to report the results to the user in order to make effective and efficient use of these results.

There are known in the art methods of determining an order of reporting search results carried out in a computer network. One of the methods assumes that the more links that direct to a particular resource, the resource is more popular, *i.e*., is better and therefore should be placed higher on the list reported to the user that another resource that is referred to by a smaller number of other web sites. This approach, however, does not involve any kind of feedback from the users.

Hence, an improved method of monitoring usage of computer network resources and method of reporting results of searches carried out in a computer network would be advantageous and, in particular, ones that are focused on the user's individual preferences and interests.

### SUMMARY OF THE INVENTION

Accordingly, the disclosed embodiments of the present invention provide a circuit and method to mitigate, alleviate or eliminate one or more of the disadvantages mentioned above singly or in any combination.

According to a first aspect of the present invention there is provided a method of monitoring usage of computer network resources by a plurality of users as defined in claim 1.

According to a second aspect of the present invention there is provided a method of reporting to a user results of a search carried out in a computer network as defined in claim 17.

According to a third aspect of the present invention there is provided a common access means as defined in claim 29.

According to a fourth aspect of the present invention there is provided a common access means as defined in claim 30.

According to a fifth aspect of the present invention there is provided a computer network as defined in claim 31.

According to a sixth aspect of the present invention there is provided a computer program product as defined in claim 34.

According to a seventh aspect of the present invention there is provided a computer program product as defined in claim 35.

Further features of the present inventions are as claimed in the dependent claims.

The present invention beneficially allows for providing results of a search in a computer network, which are tailored to the specific profile of the user that initiated the search. It also allows for obtaining users' evaluation of the resources in the form of a rating and for using this rating in determining the order of presentation of results in the search report. Instead of generating a search report, in which the results are ordered exactly in the same way for each and every user who used the same query, the present invention produces the search report in which the order is driven, amongst other factors, by quality and popularity of the resources amongst other users with similar profiles. The present invention also allows the user to store selected results of the searches in folders in the form of graphic representations of the resources (e.g., icons, thumbnail snapshots of websites, etc.). The graphic representations of the resources are bookmarks located in a grid on a screen of a user's monitor display. The size of the grid automatically adjusts itself to the resolution of the user's monitor display. This provides easy access to the network resources the user considered the most useful.

### BRIEF DESCRIPTION OF THE DRAWING(S)

The present invention will be understood and appreciated more fully from the following detailed description when taken in conjunction with the accompanying drawings in which:
FIG. 1 is a flowchart illustrating a method of monitoring usage of computer network resources in accordance with one embodiment of the present invention;
FIG. 2 is a flowchart illustrating a method of reporting to a user results of a search carried out in a computer network in accordance with one embodiment of the present invention;
FIG. 3 illustrate screen images presenting results of a search in accordance with one embodiment of the present invention;
FIG. 3A illustrates a screen image presenting bookmarks stored in a private folder in accordance with one embodiment of the present invention;
FIG. 4 is a block diagram illustrating a computer network in accordance with one embodiment of the present invention.

### DESCRIPTION OF AN EMBODIMENT OF THE INVENTION

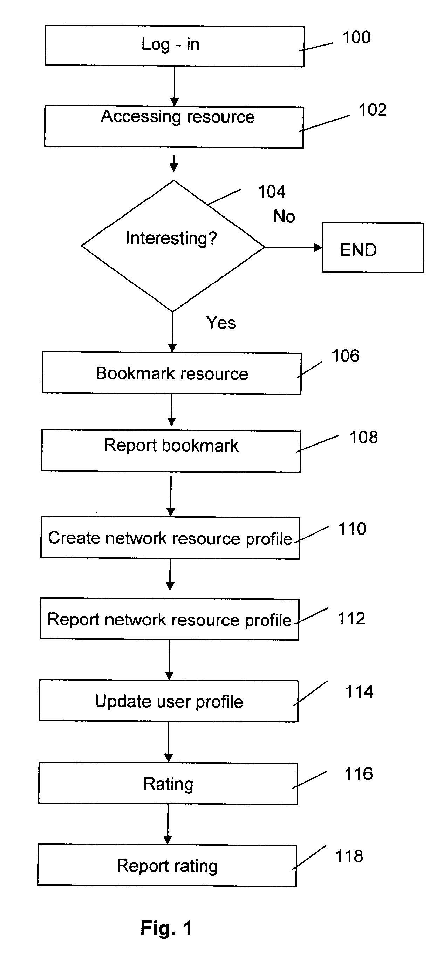

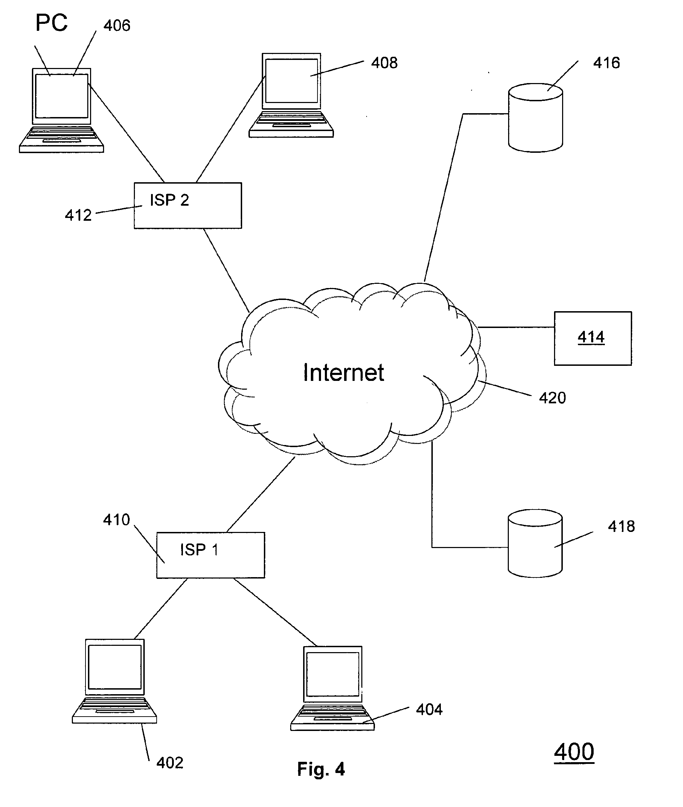

With reference to FIG. 1 and FIG. 4, one embodiment of a method of monitoring usage of computer network resources 416, 418 by a plurality of users, is presented. In this embodiment the plurality of users communicates with the computer network 400 using computerized devices 402 to 408. In this particular embodiment illustrating the Internet, the connection is established via access hardware of Internet Service Providers (ISP) 410 and 412, which access hardware is part of the network infrastructure, using for example xDSL lines or any other available service. The role of the ISP is to provide a physical connection of the subscriber's computer 402 to 408 to the Internet. It is, however, possible that the computerized devices are connected together via a Local Area Network (LAN), and this LAN is connected to the Internet via a leased line. The users access 102 the network resources 416, 418 using common access means 414, which, in a simple embodiment, is a server controlled by software in a way that works as a web site for the end user. In more complicated embodiments, when it is necessary to process large volumes of network traffic, it may be a group of servers controlled by such software. In order to use the services provided by the common access means 414, the user 402 goes through a log-in process 100 in which authentication and authorization is carried out. In alternative embodiments it is possible to use the services provided by the common access means 414 without the log-in process.

Once the user has logged-in 100, he enters a private area assigned to him. There is a profile of the user stored at the common access means 414. It allows for more accurate analyzing of using of the resources. For example, resources accessed by a teenager and the rating given by the teenager to the resources is different from resources accessed by an academic teacher specializing in microbiology whose hobby is sailing. Having the basic knowledge of the users makes it is possible to better analyze the way they use the Internet resources and to use this knowledge in preparation of the search reports.

The user then accesses 102 a network resource, *e.g*., a web site. If he thinks it is worth storing it for future reference 104, he bookmarks 106 the web site. The user is also asked by the software controlling the common access means to create a network resource profile 110. The profile of the resource is, in one embodiment, a tag associated with the bookmark. It is important to understand the important role of the resource profile. The user interested in the sport of sailing, after initiating an Internet search with the keyword "sailing," will receive millions of hits. If he is professionally working in the sailing industry, he will be interested in different resources than a user whose hobby is sailing. Therefore the profiles of the resources created by the users and combined with the profiles of the users that created that profiles are powerful tools in providing customized search results to the end users. The user is also given the opportunity to rate 116 the web site. In different embodiments the rating can be based on a different scale of points. Again, the points given by the users with different user profiles will be different. The same web site may be rated high by the hobbyist and low by the professional. Recording the ratings by identifying the user profiles associated with the ratings can also improve the accuracy of reporting the search results.

In one embodiment, the tags used by the users are predefined and provided by the common access means 414. Alternatively or in addition the user can create private tags, and the private tags are later distributed by the common access means 414 among the plurality of users to choose from in the step of creating 110 the network resource profile.

In operation, the common access means 414 stores the information on the bookmarks made by the users, the profiles created by them and the rating given.

In one embodiment the bookmarks, network resource profiles, and ratings are created locally in the computerized devices 402 to 408 used by the users, and they are then transmitted (reported) 108, 112, 118 to the common access means 414 in the form of a computer readable file or files (when sent separately) with the user ID in order to maintain the association of the user profile and his network preferences and behaviors. In one embodiment the files are sent to the common access means 414 periodically; however, transmitting them in real time is also possible. Alternatively, the bookmarks, network resource profiles and ratings are created in the private area (folder) of the user at the common access means 414 and therefore accessible for processing by the common access means 414 immediately after creation.

With the large amount of Internet traffic, even if a fraction of the users using the common access means 414 will bookmark the resources, create their profiles, and rate them, the effect of scale will create a large database that can be a powerful tool in providing search results tailored to personal preferences of the users.

In one embodiment of the present invention, the user can have more than one user profile. A user in his professional job has one set of preferences, habits, and behaviors closely related and determined by the job and profession (*e.g*., a brain surgeon working in a hospital), and the same user in his private life may be a passionate bird watcher. Obviously his Internet preferences for his profession or job and for his private interests will be very different. Therefore having the possibility of defining more than one profile for one user is a great advantage.

For accuracy of the monitoring process, the user profile is created on the basis of one of a plurality of predefined user profiles. This enables limiting the number of types of profiles created, which results in easier and faster processing. However, in one embodiment the user profile created on the basis of the predefined template is updated 114 on the basis of the bookmarked network resources 416, 418 and respective network resource profiles created by the users. In this embodiment this additional information will allow for automatic creation of sub-types of the predefined profiles.

As in case of the bookmarks, the update 114 of the user profile is created locally in the user's computerized device 402 to 408 and reported to the common access means 414 as a computer readable file containing the user ID. It is, however, possible to create the update in the server of the common access means 414.

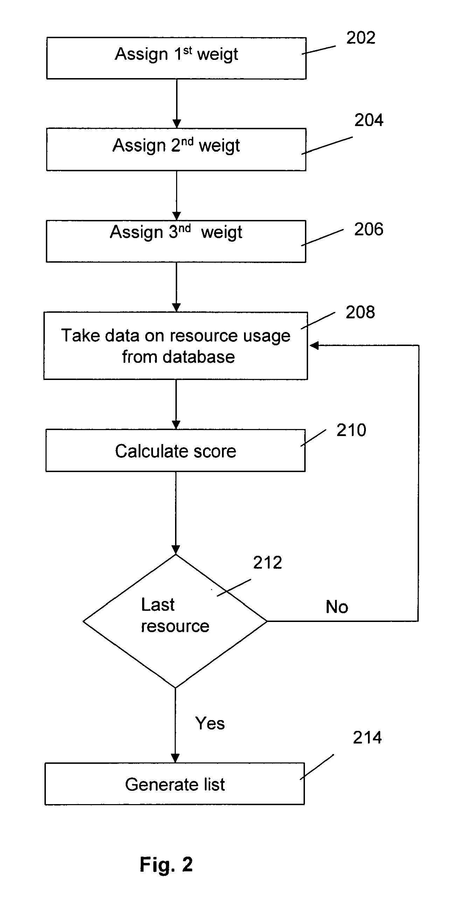

With reference to FIG. 2 and FIG. 4, one embodiment of a method of reporting to a user the results of a search carried out in a computer network is presented. The search is performed according to one of the methods known in the art, and as such it is not a subject matter of the present invention. Once the search is carried out and the resources that meet the search criteria are known, it is necessary to created a report that will be as useful for the end user as possible.

In one embodiment of the present invention, the results of the search are processed by a common access means 414 in several steps. A first weight is assigned 202 to the number of cross-references pointing to a network resource 416. The number of cross-references is an important factor, and in some way it can be compared to a book in a library. If a particular book is frequently referenced by other books or is frequently on loan, it means that the readers think it is good. Similarly, frequent references to a web site by other web sites is an indication that the site is very popular. In the next step, a second weight 204 is assigned to the number of users that bookmarked the network resource 416. This information indicates how useful the users found that resource (web site). In the next step a third weight is assigned 206 to the average rating of the network resource 416 given by the users that bookmarked the network resource 416. This is an actual indication of the quality of the resource. Finally, there is a step of calculating 210, 214 an order of presentation of the results of the search on the basis 208 of the cross-references, number of users that bookmarked the network resources, the average rating, and the assigned weights. The order of presentation of the search results is determined by calculating a point score 210 for each of the found resources. In the calculation 210 of the score, the cross-references, number of users that bookmarked the network resources, the average rating, and the assigned weights are taken into account. When the score is calculated for the last found resource, 212, the list is generated 214. In the step of calculation 210, 214 the average rating of the network resource 416 is calculated from the rating given only by users with substantially the same user profiles as the profile of the user that initiated the search. Similarly, in a calculation of the number of users that bookmarked the network resource 416, only the users with substantially the same user profiles as the profile of the user are counted. With this way of using data collected in the process of monitoring the usage of network resources as defined earlier, it is possible to create a search report that has on its top positions the links to resources that meet the search criteria and additionally match very well the profile of the user. It is based on the rule that can be summarized as follow: if something was useful for millions of users with interests similar to my interests and they rated it high, it should also be good for me.

It is possible, in an alternative embodiment, that the user profiles are not considered in calculating of the average rating or counting the number of users that bookmarked the resource. In this embodiment, the overall average is calculated and the total number of users that bookmarked the resource taken into account in creating the report.

With the passing of time the number of bookmarks in the private area (or private folder) of the user grows to the size that finding a bookmark pointing to the resource is slightly difficult. The user can define a search both in his private folder and in the public folder (or in the Internet). In this embodiment, if the search was carried out in a private folder of the user and in a public folder, the results are presented in a way that the results from the private folder are separated from the results from the public folder. The term "public folder" herein above refers to the resources available in the network (e.g., the Internet) that have been monitored in accordance with the method defined above and for which there are entries in the database in which the common access means 414 stores the monitoring data (number of bookmarks, average rating, network resource profiles and other data collected in the process monitoring usage of network resources as defined above).

In one embodiment the results of the search are presented in a form of a list 300 with an entry in the list providing a link to the resource 416 and including at least one of the following: a graphic representation of the resource 302, a Universal Resource Locator address of the resource 304, a name of the resource 306, and a description of the resource 308. These can be displayed on paper or on an electronic display device. These are the data that can be taken directly from the resource and are provided by the owner of the resource. For the end user, however, it can also be very useful if additional data are presented. Therefore in an alternative embodiment the entry in the list also includes at least part of the network resource profile 310. In a further embodiment, the entry may additionally or alternatively include information 312 on the number of users that bookmarked this resource 416. In yet a further embodiment, the entry in the list also includes the average rating 314 of the resource. If in determining the order of the list the user profile was taken into account, the average rating presented is calculated from ratings given only by the users with substantially the same user profiles as the profile of the user.

In the method of reporting to a user the results of a search carried out in a computer network the number of users that bookmarked the network resource 416 and the average rating of the network resource 416 is obtained in accordance with the method of monitoring usage of computer network resources.

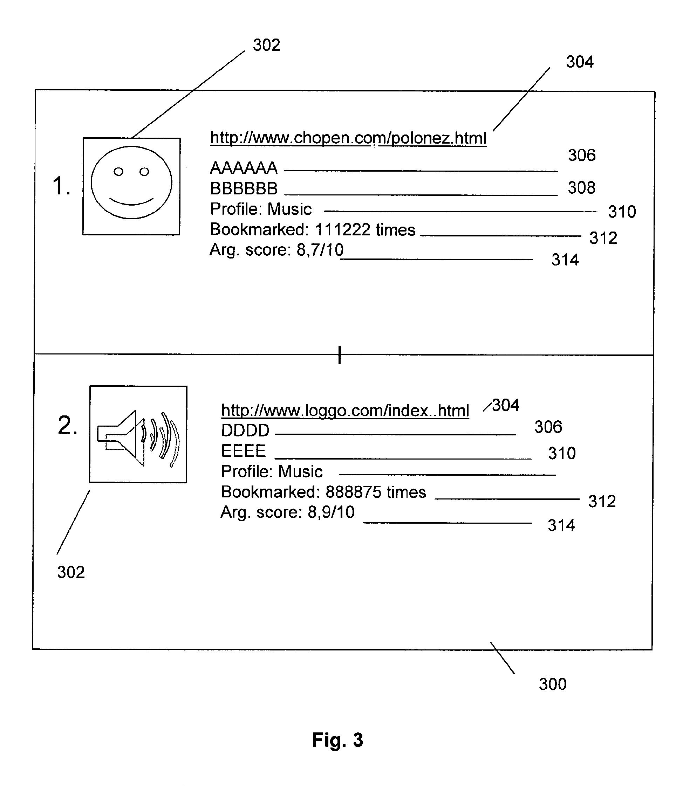

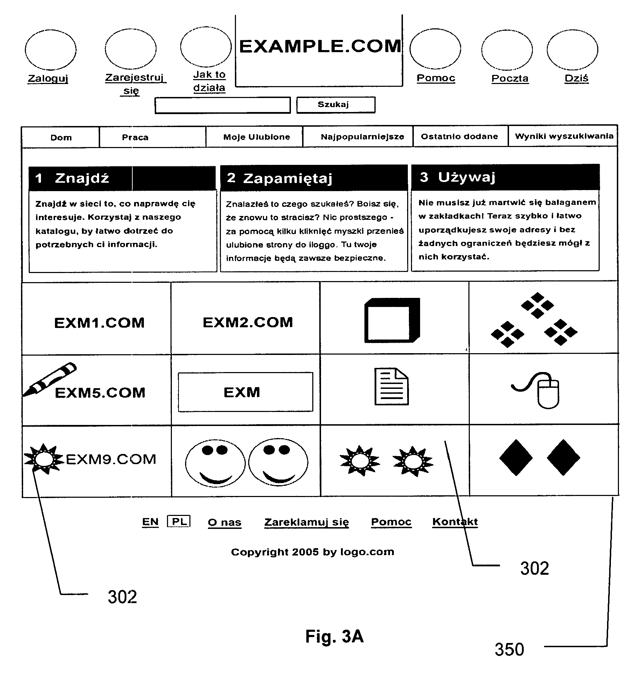

With reference to FIG. 3A, a screen image presenting bookmarks stored in a private folder in accordance with one embodiment of the present invention is shown. The bookmarks made by the user are presented in the form of graphic representations (*e.g*., icons, thumbnail snapshots of websites, etc.) of the resources 302 distributed in a grid 350 on a screen of the computerized device 402. The graphic representations 302 provide links to respective resources. The graphic representations 302 can be rearranged manually by the user in a drag-and-drop manner or automatically by software that controls the appearance of the graphical user interface. In another embodiment the results of the search are presented in the form of graphic representations of the resources 302 distributed in a grid 350 on a screen of the computerized device 402, and the graphic representations 302 provide links to respective resources. In this embodiment the graphic representations 302 of the resources can be moved to the private folder in the drag-and-drop manner and this operation causes bookmarking of these dragged-and-dropped elements.

With reference to FIG. 4, one embodiment of a computer network 400 is depicted. For the sake of clarity the drawings present the invention in a very schematic way with elements and lines not essential for understanding the invention omitted. The computer network 400 includes a plurality of computerized devices 402 to 408 connected to an access hardware of Internet Service Providers (ISP) 410, 412, which access hardware is part of the network infrastructure, and at least one common access means 414 for accessing network resources 416, 418. It is, however, possible that the computerized devices 402 - 408 are connected together in the form of a Local Area Network (LAN), and this LAN is connected to the Internet via a leased line. The user equipment 402 - 408 and the common access means 414 may be remote, and communication between them is via a network, such as the Internet 420. The common access means 414 is adapted to report to a user, accessing the network resources via one of said computerized devices 402, results of a search carried out in the computer network 400, wherein the order on the list presenting the search results is determined in accordance with the method as described above.

The computerized device 402 - 408 may be a personal computer, a laptop computer, a mobile phone, Personal Digital Assistant or any other microprocessor based device adapted to cooperate with a computer network.

The invention can be implemented in any suitable form including hardware, software, software embedded in hardware, or any combination of these. The functionality defined in the present invention may be implemented in a plurality of units or as part of other functional units. In consequence, the invention may be physically and functionally distributed between different units and processors.

## Claims

1. A method of monitoring usage of computer network resources (416, 418) by a plurality of users communicating with the computer network using computerized devices (402 to 408) and accessing (102) the network resources (416, 418) via a common access means (414) and user profiles of at least part of the plurality of users are stored at the common access means (414), wherein the monitoring is carried out by the common access means (414), the method comprising the steps of:
a) bookmarking (106) by at least part of the plurality of users the accessed network resource (416);
b) creating (110) by at least part of the plurality of users a network resource profile by adding at least one tag that describes the network resource (416); and
c) storing the information on bookmarks and network resource profiles in the common access means (414).

2. The method according to claim 1, further comprising the step of reporting (112) said network resource profiles created by individual users to the common access means (414).

3. The method according to claim 1, further comprising the step of updating (114) the user profile for at least a part of the plurality of users on the basis of the bookmarked network resources (416, 418) and respective network resource profiles created by said users.

4. The method according to claim 3, wherein said update (114) of the user profile is created locally in the user's computerized device (402 to 408) and reported to the common access means (414) as a computer readable file containing the user ID.

5. The method according to claim 1 further comprising the step of reporting (108) the bookmarks created by individual users.

6. The method according to claim 1, wherein the user profile is created and stored on a server, wherein said server is part of the common access means (414).

7. The method according to any one of preceding claims, wherein the user profile is created using predefined user profiles.

8. The method according to any one of preceding claims, wherein the network resource profile is created (110) locally in the user's computerized device (402 to 408) and reported (112) periodically to the common access means (414) as a computer readable file containing the user ID.

9. The method according to any one of claims 1 - 8, wherein the network resource profile is created (110) in the common access means (414).

10. The method according to any one of claims 1 - 9, wherein the network resource profile is created (110) within a private area of the common access means (414) assigned to the user and accessed through authentication and authorization procedures.

11. The method according to any one of preceding claims, wherein the tags used by the users are predefined and provided by the common access means (414).

12. The method according to claim 11, comprising creating private tags and distributing said private tags by the common access means (414) among the plurality of users to choose from in the step cf creating (110) the network resource profile.

13. The method according to any one of preceding claims, wherein the user rates (116) claim 1, comprising rating the resource (416) and reporting (118) the rating to the common access means (414).

14. The method according to any one of preceding claims further comprising analyzing reported network resource profiles and respective user profiles in which network resource profiles of the same resource are grouped into several groups as determined by the profiles of the users.

15. The method according to any one of preceding claims, wherein the computer network (400) comprises the Internet and the resource (416, 418) comprises a web site, data file, media file, or web service.

16. The method according to any one of preceding claims, comprising providing the user with more than one user profile.

17. A method of reporting to a user results of a search carried out in a computer network (400) that includes a plurality of computerized devices (402 to 408) connected to a network infrastructure (410, 412) and at least one common access means (414) for accessing network resources (416, 418), wherein the results of the search are processed by the common access means (414), the method comprising:
a) assigning a first weight (202) to the number of cross-references pointing to a network resource (416);
b) assigning a second weight (204) to the number of users that bookmarked said network resource (416);
c) assigning a third weight (206) to an average rating of said network resource (416) given by the users that bookmarked said network resource (416);
d) calculating (210, 214) an order of presentation of the results of the search on the basis (208) of the cross-references, number of users that bookmarked said network resources, the average rating and the assigned weights.

18. The method according to claim 17, wherein the number of users that bookmarked said network resource (416) and the average rating of said network resource (416) is obtained in accordance with the method defined in claims 1 - 16.

19. The method according to claim 17 or 18, wherein the average rating of the network resource (416) the rating given only by users with substantially the same user profiles as the profile of the user is used.

20. The method according to claim 17 or 18 or 19, wherein in calculating the number of users that bookmarked said network resource (416) only the users with substantially the same user profiles as the profile of the user are counted.

21. The method according to any one of claims 17 - 20, wherein if the search was carried out in a private folder of the user and in a public folder, the results are presented in a way that results from the private folder are separated from the results from the public folder.

22. The method according to any one of claims 17 - 21, wherein the results are presented in the form of a graphic representations of the resources (302) distributed in a grid (350) on a screen of the computerized device (402) and the graphic representations (302) provide links to respective resources.

23. The method according to any one of claims 17 - 21, wherein bookmarks made by the user are presented in the form of a graphic representations of the resources (302) distributed in a grid (350) on a screen of the computerized device (402) and the graphic representations (302) provide links to respective resources.

24. The method according to any one of claims 17 - 21, wherein comprising presenting the results of the search in the form of a list (300) with an entry in said list providing a link to the said resource (416, 418) and comprising at least one of the following: a graphic representation of the resource (302), an Universal Resource Locator address of the resource (304), a name of the resource (306), and description of the resource (308).

25. The method according to claim 24, wherein the entry in the list also comprises at least part of the network resource profile (310).

26. The method according to claim 24, wherein the entry in the list also comprises information (312) on the number of users that bookmarked this resource (416).

27. The method according to claim 24, wherein the entry in the list also comprises the average rating (314) of the resource.

28. The method according to claim 27, wherein comprising calculating the average rating from ratings given only by the users with substantially the same user profiles as the profile of the user.

29. Common access means adapted to operate according to the method as defined in any one of claims 1 - 16.

30. Common access means adapted to operate according to the method as defined in any one of claims 17 - 28.

31. A computer network (400) comprising a plurality of computerized devices (402 to 408) connected to a network infrastructure (410, 412) and at least one common access means (414) for accessing network resources (416, 418), the common access means (414) being adapted to report to a user, accessing the network resources via one of said computerized devices (402 to 408), results of a search carried out in the computer network (400), wherein the results of the search are processed by the common access means (414), and the common access means (414) is adapted to:
a) assign a first weight (202) to a number of cross-references pointing to a network resource (416);
b) assign a second weight (204) to a number of users that bookmarked said network resource (416);
c) assign a third weight (206) to an average rating of said network resource (416) given by users that bookmarked said network resource (416); and
d) calculate (210) an order of presentation of the results of the search on the basis (208) of the cross-references, number of users that bookmarked said network resources (416, 418), the average rating and the assigned weights.

32. The computer network (400) according to claim 31 further adapted to use in calculation of the average rating of the network resource the rating given only by users with substantially the same user profiles as the profile of the user.

33. The computer network (400) according to claim 31 or 32 further adapted to include in calculation of the number of users that bookmarked said network resource only the users with substantially the same user profiles as the profile of the user.

34. A computer program product, adapted to operate, when run on a computerized device, according to the method as defined in any one of claims 1 - 16.

35. A computer program product, adapted to operate, when run on a computerized device, according to a method as defined in any one of claims 17 - 28.
